# EUROPEAN PATENT APPLICATION

(11) **EP 4 672 712 A1**
(43) Date of publication of application: **31.12.2025**
(21) Application number: 24216216.2
(22) Date of filing: 28.11.2024
(51) Int. Cl.: H04L 49/109, H04L 49/00, H04L 49/351, H04L 49/552

(54) **ULTRA-LOW LATENCY SWITCHING APPARATUS AND A CASCADING METHOD THEREOF**

(30) Priority: 28.06.2024 CN 202410865167
(71) Applicant: New H3C Technologies Co., Ltd., Hangzhou, Zhejiang 310052 (CN)
(72) Inventor: Ma, Juan, Beijing, 100102 (CN); Lu, Yi, Beijing, 100102 (CN); Zhu, Xiaofang, Beijing, 100102 (CN)
(74) Representative: Zimmermann & Partner Patentanwälte mbB

(57) **Abstract**

An ultra-low latency switching apparatus and a cascading method thereof are provided. In the method, one first enhanced signal port located at a Media Access Control, MAC, unit is allocated to a unidirectional forwarding port group of a switching hardware unit; the unidirectional forwarding port group comprises one first port serving as a source port and one or more second ports serving as destination ports, a first inter-chip link is established from the first port to the first enhanced signal port and reaches the second ports through an internal loopback of the first enhanced signal port; pre-emphasis transmission parameters for each of the second ports are set.

## Description

### TECHNICAL FIELD

The present disclosure relates to the field of communication technology, and in particular to an ultra-low latency switching apparatus and a cascading method thereof.

### BACKGROUND

The financial securities industry's demand for high-frequency trading has become increasingly urgent, leading to an explosive growth in demand for ultra-fast trading systems composed of ultra-low latency switches. Under this backdrop of demand, ultra-low latency switches are emerged with ultra-low latency and minimal functionality. Ultra-low latency switches feature a single layer of forwarding functionality, enabling ultra-low latency forwarding.

During networking, data ports between ultra-low latency switches are directly connected via cables based on business requirements to reduce the forwarding latency of physical links between switches. However, issues such as signal attenuation and reduced immunity to interference arise when data packets are forwarded through physical links. When ultra-low latency switches forward data packets from financial servers to other financial servers or financial clients, the data packets may fail to be correctly parsed due to signal attenuation, resulting in data loss and subsequently affecting transaction stability.

### SUMMARY

Examples of the present disclosure provide an ultra-low latency switching apparatus and a cascading method thereof, thereby enhancing the signal of data packets forwarded between cascaded ultra-low latency switching apparatuses.

To achieve the aforementioned objective, the present disclosure provides a cascading method of ultra-low latency switching apparatus. The method includes allocating one first enhanced signal port located at the Media Access Control (MAC) unit to a unidirectional forwarding port group of a switching hardware unit; wherein the unidirectional forwarding port group includes one first port serving as a source port and one or more second ports serving as destination ports; establishing a first inter-chip link from the first port to the first enhanced signal port and looping back internally through the first enhanced signal port to reach the second ports; and setting pre-emphasis transmission parameters for each of the second ports.

To achieve the aforementioned objective, the present disclosure also provides an ultra-low latency switching apparatus comprising a processor, a non-transitory machine-readable storage medium, a switching hardware unit, and a MAC hardware unit. The switching hardware unit is equipped with a plurality of ports for network communication. The storage medium is to store a set of machine-executable instructions. The processor is to execute the set of machine-executable instructions in the storage medium to perform cascading for the ultra-low latency switching apparatus comprising: allocating one first enhanced signal port located at the MAC hardware unit to a unidirectional forwarding port group of the switching hardware unit; wherein the unidirectional forwarding port group includes one first port serving as a source port and one or more second ports serving as destination ports; establishing a first inter-chip link from the first port to the first enhanced signal port and looping back internally through the first enhanced signal port to reach each of the second ports; and setting pre-emphasis transmission parameters for each of the second ports.

The beneficial effects of the present disclosure are that it achieves signal enhancement by utilizing the MAC chip with other functions on the ultra-low latency switching apparatus, providing signal enhancement for forwarded data packets, supporting multi-level cascading of multiple ultra-low latency switching apparatuses within the network, and extending the transmission distance of ultra-low latency switching apparatuses.

### BRIEF DESCRIPTION OF THE DRAWINGS

FIG. 1 is a block diagram illustrating a cascading method of ultra-low latency switching apparatus in accordance with an example of the present disclosure.
Fig. 2 is a schematic diagram illustrating signal enhancement performed by an ultra-low latency switching apparatus on forwarded data packets in accordance with an example of the present disclosure.
Fig. 3 is a schematic diagram illustrating signal enhancement performed by an ultra-low latency switching apparatus on forwarded data packets in accordance with an example of the present disclosure.
Fig. 4 is a schematic diagram illustrating signal enhancement performed by an ultra-low latency switching apparatus on forwarded data packets in accordance with an example of the present disclosure.
Fig. 5 is a schematic diagram of an ultra-low latency switching apparatus for signal enhancement of forwarded data packets in accordance with an example of the present disclosure.

### DETAILED DESCRIPTION

Illustrative examples will be described in detail herein with the examples thereof expressed in the drawings. When the following descriptions involve the drawings, like numerals in different drawings represent like or similar elements unless stated otherwise. The implementations described in the following examples do not represent all implementations consistent with the present disclosure. On the contrary, they are merely examples of an apparatus and a method consistent with some aspects of the present disclosure described in detail in the appended claims.

In the terminology used, the term "includes" means including but not limited to; the term "contains" means including but not limited to; the terms "above," "within," and "below" include the given number; the terms "greater than" and "less than" do not include the given number. The term "based on" means based on at least part of it.

The terminology used in the present disclosure is for the purpose of describing a particular example only, and is not intended to be limiting of the present disclosure. The singular forms such as "a", 'said", and "the" used in the present disclosure and the appended claims are further intended to include multiple, unless the context clearly indicates otherwise. It is also to be understood that the term "and/or" as used herein refers to any or all possible combinations that include one or more associated listed items.

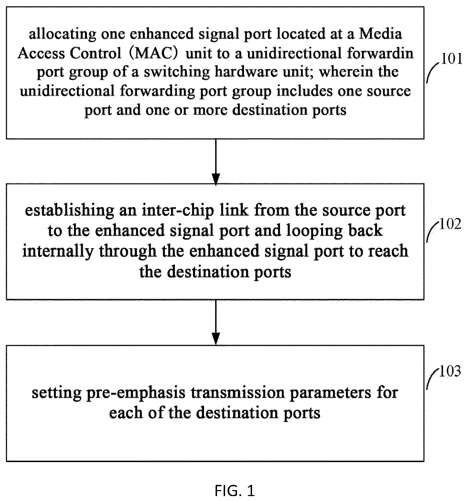

Fig. 1 is a block diagram illustrating a cascading method of an ultra-low latency switching apparatuses in accordance with an example of the present disclosure. Processes shown in Fig.1 are as follows:
Process 101: allocating one enhanced signal port located at a Media Access Control (MAC) unit to a unidirectional forwarding port group of a switching hardware unit; wherein the unidirectional forwarding port group includes one source port and one or more destination ports.
Process 102: establishing an inter-chip link from the source port to the enhanced signal port and looping back internally through the enhanced signal port to reach the destination ports.
Process 103: setting pre-emphasis transmission parameters for each of the destination ports.

The beneficial effects of the present disclosure are that it achieves signal enhancement by utilizing the MAC chip with other functions on the ultra-low latency switching apparatus, providing signal enhancement for forwarded data packets, supporting multi-level cascading of multiple ultra-low latency switching apparatuses within the network, and extending the transmission distance.

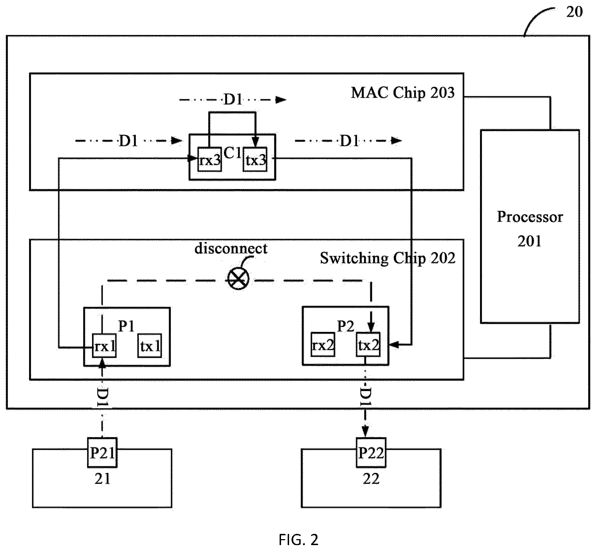

Fig. 2 is a schematic diagram illustrating signal enhancement performed by an ultra-low latency switching apparatus on forwarded data packets based on an example of the present disclosure. In Fig. 2, ports P1 and P2 of an ultra-low latency switching apparatus 20 are connected to a port P21 of an ultra-low latency switching apparatus 21 and a port P22 of an ultra-low latency switching apparatus 22, respectively. The apparatuses 20-22 in Fig. 2 are used to illustrate a basic cascading mode between ultra-low latency switching apparatuses, where data packets from one apparatus are sent to another apparatus.

Based on traffic data forwarding requirements in the networks, the apparatus 20 may send data packets from the apparatus 21 to the apparatus 22. Therefore, the port P1 of switching chip 202 in the apparatus 20 may serves as a source port, and the port P2 may serve as a destination port. The switching chip may be implemented by a layer one switching chip.

A processor 201 of the apparatus 20 may assign one Physical Layer (PHY) Port, such as a Physical Interface for PCI Express (PIPE) port, C1 located within a Media Access Control (MAC) chip 203 to ports P1 and P2 as an enhanced signal port.

The processor 201 may set a port index of the port P1 recorded in a source port register of the port P2 to invalid, thereby disconnecting an intra-chip link between the port P1 and the port P2.

The processor 201 may set an invalid value recorded in the source port register of the port P2 as a port index of the port C1, and connect a transmitter TX of the port P2 to a transmitter TX of the port C1, thereby establishing an inter-chip link between the port C1 and the port P2.

The processor 201 may configure the port C1 as an internal loopback port, i.e., connect a receiver RX of the port C1 to a transmitter TX of the port C1 directly. The MAC chip 203 may enhance signals of data packets received by the port C1 through Physical Coding Sublayer (PCS) and send the data packets directly through the transmitter TX without entering MAC layer of the MAC chip 203.

The processor 201 may verify that the port C1 of the MAC chip 203 is in a normal operating state, i.e. an UP state. The processor 201 may verify which state the port C1 is in by calling an Application Interface (API). The present disclosure does not limit processes by which the processor 201 verifies that the port C1 is in the normal operating state.

The processor 201 may verify that the ports P1 and P2 are in a normal operating state. The processor 201 may verify whether the ports P1 and P2 are signal-locked and can normally receive and send signals over physical links by reading Loss signal registers of the ports P1 and P2 on the switching chip 202. The present disclosure does not limit process by which the processor 201 verifies that the ports P1 and P2 are in the normal operating state.

The processor 201 may verify that the ports P1 and P2 are in the normal operating state, so that the inter-chip link between the ports P1, C1, and P2 functions normally. The inter-chip link is established from the port P1 to C1, and reaches the port P2 through the internal loopback of the port C1. The processor 201 may set pre-emphasis transmission parameters for the port P2.

In this way, the apparatuses 20, 21, and 22 are cascaded.

A data packet D1 may arrive at the port P1, the switching chip 202 may send the data packet D1 to the port C1 via the inter-chip link.

The MAC chip 203 may perform PCS signal enhancement on the data packet D1 received by the port C1, loopback the data packet D1 through the port C1, thus the data packet D1 is transmitted to the port P2 through the inter-chip link.

The switching chip may send the data packet D1 through the port P2 based on the pre-emphasis transmission parameters of the port P2.

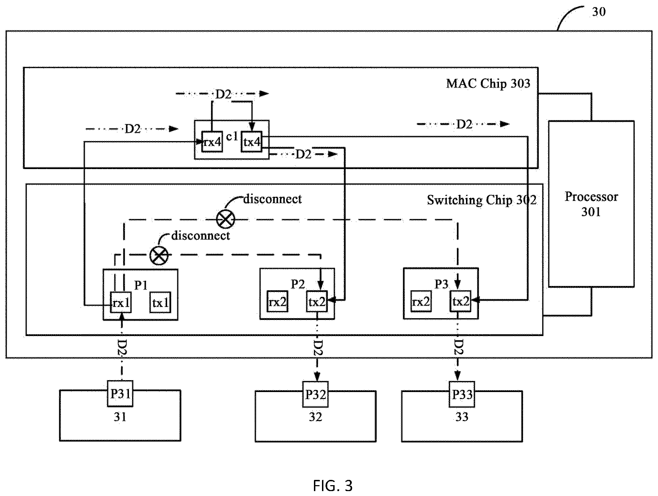

Fig. 3 illustrates a schematic diagram of signal enhancement performed by an ultra-low latency switching apparatus on forwarded data packets based on another example of the present disclosure. Ports P1, P2, and P3 of an ultra-low latency switching apparatus 30 are connected to a port P31 of an ultra-low latency switching apparatus 31, a port P32 of an ultra-low latency switching apparatus 32, and a port P33 of an ultra-low latency switching apparatus 33, respectively. The apparatuses 30-33 shown in Fig. 3 are used to illustrate a basic cascading mode, where data packets received by one source port are sent through multiple destination ports.

Based on the traffic data forwarding requirements in the networks, the apparatus 30 may send data packets from the apparatus 31 to the apparatuses 32 and 33. The Port P1 of a switching chip 302 of the apparatus 30 may serve as a source port, the ports P2 and P3 may serve as destination ports.

A processor 301 of the apparatus 30 may assign one PHY Port, such as one PIPE port, C1 located within a MAC chip 303 to the ports P1, P2, and P3 as an enhanced signal port.

The processor 301 may set a port index of the port P1 recorded in source port registers of the ports P2 and P3 to invalid, thereby disconnecting intra-chip links from the port P1 to the ports P2 and P3.

The processor 301 may set the invalid value recorded in the source port register of the port P2 as a port index of the port C1, establishing an inter-chip link between the port C1 and the port P2. Similarly, the invalid value recorded in the source port register of the port P3 may be set as a port index of the port C1, establishing an inter-chip link between the port C1 and the port P3.

The processor 301 may configure the port C1 as an internal loopback port.

The processor 301 may verify that the port C1 of the MAC chip 303 and the ports P1, P2, and P3 are in normal operating states. The inter-chip links between the ports P1, C1, P2, and P3 function normally. The inter-chip link is established the port P1 to the port C1, and reaches the port P2 through the internal loopback of the port C1, as well as the inter-chip link is established from the port P1 to the port C1, and reaches the port P3 through the internal loopback of the port C1.

The processor 301 may set pre-emphasis transmission parameters for the ports P2 and P3, respectively.

In this way, the apparatuses 30, 31, 32, and 33 are cascaded.

When a data packet D2 arrives at the port P1, the switching chip 302 may send the data packet D2 to the port C1 via the inter-chip link.

The MAC chip 303 may perform PCS signal enhancement on the data packet D2 received by the port C1, loopback the data packet D2 with enhanced signals through the port C1, and send the data packet D2 to the ports P2 and P3 on the inter-chip link.

The switching chip 302 may send the data packet D2 through the ports P2 and P3 based on the pre-emphasis transmission parameters of the ports P2 and P3.

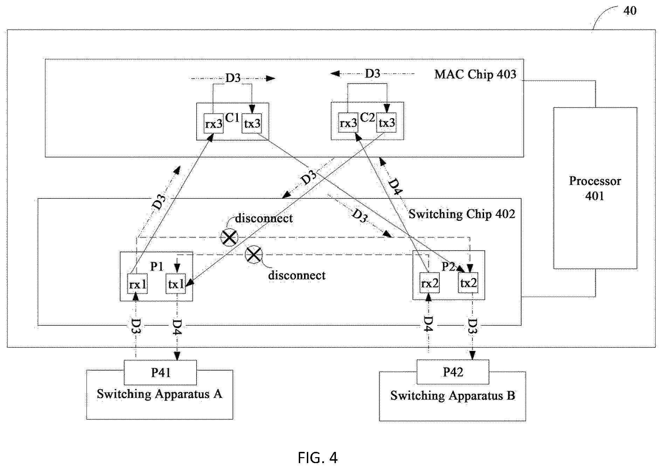

Fig. 4 illustrates a schematic diagram of signal enhancement performed by an ultra-low latency switching apparatus on forwarded data packets based on another example of the present disclosure.

Ports P1 and P2 of an ultra-low latency switching apparatus 40 are connected to a port P41 of an ultra-low latency switching apparatus 41 and a port P42 of an ultra-low latency switching apparatus 42, respectively. The apparatuses 40-42 in Fig. 4 are used to illustrate a basic cascading mode, where data packets between the apparatuses 41 and 42 are forwarded by the apparatus 40.

Based on the traffic data forwarding requirements of the networks, the port P1 is a source port of the port P2 and a destination port of the port P2, while the port P2 is a source port of the port P1 and a destination port of the portP1; so that, a source port register of the port P1 records an index of port P2, and a source port register of the port P2 records an index of the port P1.

A processor 401 of the apparatus 40 may assign two PHY ports, such as PIPE ports, C1 and C2 located within a MAC chip 403 to the ports P1 and P2 as enhanced signal ports.

The processor 401 may set port indexes in source port registers of the ports P1 and P2 to invalid, thereby disconnecting intra-chip links between the port P1 and the port P2.

The processor 401 may set the invalid value recorded in the source port register of the port P2 to a port index of the port C1, establishing an inter-chip link between the port C1 and the port P2. Similarly, the invalid value recorded in the source port register of the port P1 on the chip may be set as a port index of the port C2, establishing an inter-chip link between the port C2 and the port P1.

The processor 401 may configure the ports C1 and C2 as internal loopback ports.

The processor 401 may verify that the ports C1 and C2 of the MAC chip 403 and the ports P1 and P2 are in normal operating states. One Inter-chip link is established from the port P1 to the port C1, and reaches the port P2 through the internal loopback of the port C1, as well as the other Inter-chip link is established from the port P2 to the port C2, and reaches the port P1 through the internal loopback of port C2.

The processor 401 may set re-emphasis transmission parameters for the ports P1 and P2, respectively.

In this way, the switches 40, 41, and 42 are cascaded.

When a data packet D3 arrives at the port P1, the switching chip 402 may send the data packet D3 to the port C1 via the inter-chip link from the port P1 and the port P2. The MAC chip 403 may perform PCS signal enhancement on the data packet D3 received by the port C1, loopback the data packet D3 after signal enhancement through the port C1, and send the data packet D3 to the port P2 on the inter-chip link from the port P1 to the port P2. The switching chip 402 may then send the data packet D3 through the port P2 based on the pre-emphasis transmission parameters of the port P2.

When a data packet D4 arrives at the port P2, the switching chip 402 may send the data packet D4 to the port C2 via the inter-chip link from the port P2 to the port P1. The MAC chip 403 may perform PCS signal enhancement on the data packet D4 received by the port C2, loopback the data packet D4 after signal enhancement through the port C2, and send the data packet D4 to the port P1 on the inter-chip link from the port P2 to the port P1. The switching chip 402 may then send the data packet D4 through the port 1 based on the pre-emphasis transmission parameters of the port P1.

In a network constructed by ultra-low latency switching apparatuses, the ultra-low latency switching apparatuses can be cascaded in one or more ways shown in Figs. 2-4. The ultra-low latency switching apparatuses based on the cascaded ways in the examples of Figs. 2-4 do not require Clock Data Recovery (CDR) circuits to be set up at the source and destination the ports, thereby reducing latency.

The above examples of the present disclosure utilize the MAC chip with other functions on the ultra-low latency switching apparatus to achieve signal enhancement and reduce latency, supporting multi-level cascading of the ultra-low latency switching apparatuses and extending transmission distance across the ultra-low latency switching apparatuses.

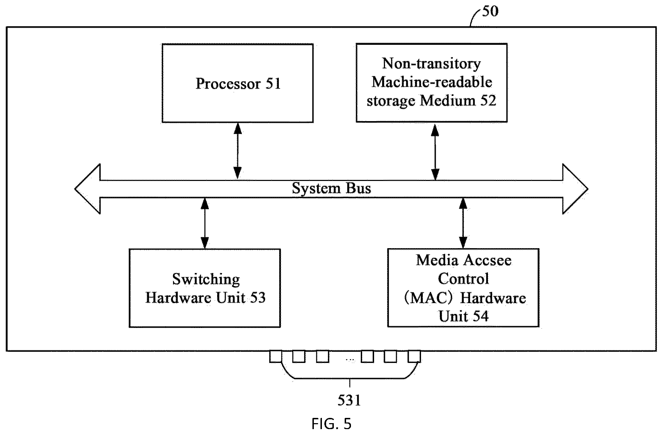

Fig. 5 is a schematic diagram of an ultra-low latency switching apparatus for signal enhancement of forwarded data packets provided in an example of the present disclosure. The apparatus 50 has a processor 51, a non-transitory machine-readable storage medium 52, a switching hardware unit 53 implemented by a switching chip, and a Media Access Control (MAC) hardware unit 54 implemented by a hardware chip; wherein the switching hardware unit 53 is equipped with multiple ports 531 for network communication; the processor 51 may execute the following operations by running processor-executable instructions in the storage medium 52: allocating one first enhanced signal port located at the MAC hardware unit to a unidirectional forwarding port group of the switching hardware unit 53; wherein the unidirectional forwarding port group includes a first port as a source port and one or more second ports as destination ports; establishing a first inter-chip link from the first port to the first enhanced signal port and looping back internally through the first enhanced signal port to each of the second ports; setting pre-emphasis transmission parameters for each of the second ports.

The unidirectional forwarding port group of the switching hardware unit 53 includes one first port and one second port; the operation of establishing the first inter-chip link by the processor 51, through running processor-executable instructions in the storage medium 52, includes: disconnecting the intra-chip link between the first port and the second port; establishing a second inter-chip link between the first enhanced signal port and the second port; setting the first enhanced signal port as an internal loopback port; verifying that the first enhanced signal port, the first port, and the second port are in normal working states.

The unidirectional forwarding port group of the switching hardware unit 53 includes one first port and two or more of the second ports; the operation of establishing the first inter-chip link by the processor 51, through running processor-executable instructions in the storage medium 52, includes: disconnecting the intra-chip link between the first port and each second port; establishing a second inter-chip link between the first enhanced signal port and each second port; setting the first enhanced signal port as an internal loopback port; verifying that the first enhanced signal port, the first port, and each second port are in normal working states.

The bidirectional forwarding port group of the switching hardware unit 53 includes a third port and a fourth port that are mutually source and destination ports; the processor 51, through running processor-executable instructions in the medium 52, may also execute the following operations: allocating a pair of second and third enhanced signal ports located at the MAC hardware unit 54 to the bidirectional forwarding port group; establishing a third inter-chip link from the third port to the second enhanced signal port and looping back internally through the second enhanced signal port to the fourth port; establishing a fourth inter-chip link from the fourth port to the third enhanced signal port and looping back internally through the third enhanced signal port to the destination port; setting the respective pre-emphasis transmission parameters for the third port and the fourth port.

The operation of establishing the third and fourth inter-chip links by the processor 51, through running processor-executable instructions in the storage medium 52, also includes: disconnecting the intra-chip links between the third port and the fourth port; establishing the third inter-chip link between the second enhanced signal port and the fourth port; establishing the fourth inter-chip link between the third enhanced signal port and the third port; setting the second and third enhanced signal ports as internal loopback ports; verifying that the second enhanced signal port, the third enhanced signal port, the third port, and the fourth port are in normal working states.

The switching hardware unit 53 is to send a first data packet arriving at the first port to the first enhanced signal port via the first inter-chip link; the MAC hardware unit 54 is to perform physical coding sublayer signal enhancement on the first data packet received by the first enhanced signal port and loopback the first data packet via the first enhanced signal port to each second port; the switching hardware unit 53 is also to send the first data packet through each second port based on the pre-emphasis transmission parameters of each second port.

The switching hardware unit 53 is also to send a second data packet arriving at the third port to the second enhanced signal port; and send a third data packet arriving at the fourth port to the third enhanced signal port; the MAC hardware unit 54 is to perform physical coding sublayer signal enhancement on the second data packet received by the second enhanced signal port and, loop back the second data packet via the second enhanced signal port to the fourth port; and perform physical coding sublayer signal enhancement on the third data packet received by the third enhanced signal port, and loopback the third data packet via the third enhanced signal port to the third port; the switching hardware unit 53 is also to send the second data packet through the fourth port based on the pre-emphasis transmission parameters of the fourth port; and send the third data packet through the third port based on the pre-emphasis transmission parameters of the third port.

The above description is only preferred examples of the present disclosure and is not used to limit the present disclosure. Any modifications, equivalent substitutions, improvements, etc., made within the spirit and principles of the present disclosure, shall be included within the scope of protection of the present disclosure.

## Claims

1. A cascading method of ultra-low latency switching apparatus, wherein the method comprises:
allocating one first enhanced signal port located at a Media Access Control, MAC, unit to a unidirectional forwarding port group of a switching hardware unit; wherein the unidirectional forwarding port group comprises one first port serving as a source port and one or more second ports serving as destination ports;
establishing a first inter-chip link from the first port to the first enhanced signal port and looping back internally through the first enhanced signal port to reach the second ports ;
setting pre-emphasis transmission parameters for each of the second ports.

2. The method of claim 1, wherein the unidirectional forwarding port group includes the first port and one of the second ports, and
wherein establishing the first inter-chip link from the first port to the first enhanced signal port and looping back internally through the first enhanced signal port to reach the second port comprises:
disconnecting an intra-chip link between the first port and the second port;
establishing a second inter-chip link between the first enhanced signal port and the second port;
setting the first enhanced signal port as an internal loopback port;
verifying that the first enhanced signal port, the first port, and the second port are in normal working states.

3. The method of claim 1, wherein the unidirectional forwarding port group includes the first port and two or more of the second ports, and
wherein establishing the first inter-chip link from the first port to the first enhanced signal port and looping back internally through the first enhanced signal port to reach the second port comprising:
disconnecting intra-chip links between the first port and each of the second ports;
establishing a second inter-chip link between the first enhanced signal port and each of the second ports;
setting the first enhanced signal port as an internal loopback port;
verifying that the first enhanced signal port, the first port, and each of the second ports are in normal working states.

4. The method of claim 1, wherein the method further comprises:
allocating a pair of second and third enhanced signal ports located at the MAC chip to a bidirectional forwarding port group of the switching hardware unit; wherein the bidirectional forwarding port group comprises a third port and a fourth port that are both source and destination ports for each other;
establishing a third inter-chip link from the third port to the second enhanced signal port and looping back internally through the second enhanced signal port to reach the fourth port;
establishing a fourth inter-chip link from the fourth port to the third enhanced signal port and looping back internally through the third enhanced signal port to reach the third port;
setting pre-emphasis transmission parameters for the third port and the fourth port respectively.

5. The method of claim 4, wherein establishing the third inter-chip link from the third port to the second enhanced signal port and looping back internally through the second enhanced signal port to reach the fourth port, and establishing the fourth inter-chip link from the fourth port to the third enhanced signal port and looping back internally through the third enhanced signal port to reach the destination port includes:
disconnecting intra-chip links between the third port and the fourth port;
establishing the third inter-chip link between the second enhanced signal port and the fourth port;
establishing the fourth inter-chip link between the third enhanced signal port and the third port;
setting the second and third enhanced signal ports as internal loopback ports;
verifying that the second enhanced signal port, the third enhanced signal port, the third port, and the fourth port are in normal working states.

6. The method of claim 2 or 3, wherein:
a first data packet arriving at the first port is sent to the first enhanced signal port via the first inter-chip link;
the first data packet received by the first enhanced signal port undergoes physical coding sublayer signal enhancement performed by the MAC chip, and the first data packet looped back through the first enhanced signal port is sent to each second port on the first inter-chip circuit;
the switching hardware unit sends the first data packet based on the pre-emphasis transmission parameters of each second port.

7. The method of claim 5, wherein the method further comprises:
a second data packet arriving at the third port is sent to the second enhanced signal port via the third inter-chip link; the MAC chip performs physical coding sublayer signal enhancement for the second data packet received by the second enhanced signal port and loops the second data packet back to the fourth port through the second enhanced signal port;
a third data packet arriving at the fourth port is sent to the third enhanced signal port; the MAC chip performs the physical coding sublayer signal enhancement for the third data packet received by the third enhanced signal port and loops the third data packet back to the third port through the third enhanced signal port;
the switching hardware unit sends the second data packet through the fourth port based on the pre-emphasis transmission parameters of the fourth port, and sends the third data packet through the third port based on the pre-emphasis transmission parameters of the third port.

8. An ultra-low latency switching apparatus, wherein the apparatus comprises:
a processor;
a non-transitory machine-readable storage medium;
a switching hardware unit; and
a Media Access Control (MAC) hardware unit;
wherein the switching hardware unit is equipped with a plurality of ports for network communication;
the storage medium is to store a set of machine-executable instructions;
the processor is to execute the set of machine-executable instructions in the storage medium to perform cascading for the ultra-low latency switching apparatus comprising:
allocating one first enhanced signal port located at a Media Access Control, MAC, hardware unit to a unidirectional forwarding port group of the switching hardware unit; wherein the unidirectional forwarding port group includes one first port serving as a source port and one or more second ports serving as destination ports;
establishing a first inter-chip link from the first port to the first enhanced signal port and looping back internally through the first enhanced signal port to reach each of the second ports;
setting pre-emphasis transmission parameters for each of the second ports.

9. The apparatus of claim 8, wherein the unidirectional forwarding port group of the switching hardware unit includes one first port and one of the second ports;
the processor is to execute the set of machine-executable instructions to perform establishing the first inter-chip link comprising:
disconnecting an intra-chip link between the first port and the second port;
establishing a second inter-chip link between the first enhanced signal port and the second port;
setting the first enhanced signal port as an internal loopback port;
verifying that the first enhanced signal port, the first port, and the second port are in normal working states.

10. The apparatus of claim 8, wherein the unidirectional forwarding port group of the switching hardware unit includes one first port and two or more second ports;
the processor is to execute the set of machine-executable instructions to perform establishing the first inter-chip link comprising:
disconnecting an intra-chip link between the first port and each of the second ports;
establishing a second inter-chip link between the first enhanced signal port and each of the second ports;
setting the first enhanced signal port as an internal loopback port;
verifying that the first enhanced signal port, the first port, and each of the second ports are in normal working states.

11. The apparatus of claim 8, wherein a bidirectional forwarding port group of the switching hardware unit comprises a third port and a fourth port that are source and destination ports for each other;
the processor is further to execute the set of machine-executable instructions to perform:
allocating a pair of second and third enhanced signal ports located at the MAC hardware unit to the bidirectional forwarding port group;
establishing a third inter-chip link from the third port to the second enhanced signal port and looping back internally through the second enhanced signal port to reach the fourth port;
establishing a fourth inter-chip link from the fourth port to the third enhanced signal port and looping back internally through the third enhanced signal port to reach the third port;
setting pre-emphasis transmission parameters for the third port and the fourth port respectively.

12. The apparatus of claim 11, wherein the processor is to execute the set of machine-executable instructions to perform establishing the third and fourth inter-chip links comprising:
disconnecting intra-chip links between the third port and the fourth port;
establishing the third inter-chip link between the second enhanced signal port and the fourth port;
establishing the fourth inter-chip link between the third enhanced signal port and the third port;
setting the second and third enhanced signal ports as internal loopback ports;
verifying that the second enhanced signal port, the third enhanced signal port, the third port, and the fourth port are in normal working states.

13. The apparatus of claim 9 or 10, wherein:
the switching hardware unit is to send a first data packet arriving at the first port to the first enhanced signal port via the first inter-chip link;
the MAC hardware unit is to perform physical coding sublayer signal enhancement on the first data packet received by the first enhanced signal port, and loop back the first data packet via the first enhanced signal port to each of the second ports;
the switching hardware unit is to send the first data packet through each of the second ports based on the pre-emphasis transmission parameters of each of the second ports.

14. The apparatus of claim 12, wherein:
the switching hardware unit is further to send a second data packet arriving at the third port to the second enhanced signal port, and send a third data packet arriving at the fourth port to the third enhanced signal port;
the MAC hardware unit is to perform physical coding sublayer signal enhancement on the second data packet received by the second enhanced signal port, and loop back the second data packet through the second enhanced signal port to the fourth port; perform physical coding sublayer signal enhancement on the third data packet received by the third enhanced signal port, and loop back the third data packet through the third enhanced signal port to the third port;
the switching hardware unit is further to send the second data packet through the fourth port based on the pre-emphasis transmission parameter of the fourth port; and send the third data packet through the third port based on the pre-emphasis transmission parameter of the third port.
